Europäisches Patentamt

European Patent Office

Office européen des brevets

(11) Veröffentlichungsnummer: **0 498 049 A1**

# EUROPÄISCHE PATENTANMELDUNG

(21) Anmeldenummer: **91119579.0**

(22) Anmeldetag: **16.11.91**

(51) Int. Cl.5: **H01M 4/58**, H01M 10/40

(30) Priorität: **19.01.91 DE 4101533**

(43) Veröffentlichungstag der Anmeldung:
**12.08.92 Patentblatt 92/33**

(84) Benannte Vertragsstaaten:
**BE DE FR GB**

(71) Anmelder: **VARTA Batterie Aktiengesellschaft
Am Leineufer 51
W-3000 Hannover 21(DE)**

(72) Erfinder: **Herr, Rudolf, Dr.
Parkstrasse 34
W-6233 Kelkheim(DE)**
Erfinder: **Hoge, Detlev, Dr.
Albert-Lortzing-Strasse 2
W-6233 Kelkheim(DE)**
Erfinder: **Bittihn, Rainer, Dr.
Graf-von-Stauffenberg-Strasse 14
W-6270 Idstein(DE)**

(74) Vertreter: **Kaiser, Dieter Ralf, Dipl.-Ing.
Gundelhardtstrasse 72
W-6233 Kelkheim/Ts.(DE)**

(54) **Elektrochemisches Sekundärelement.**

(57) Bei einer Lithium-Sekundärzelle vom Intercalationstyp, deren positive Elektrode ein lithiiertes Übergangsmetalloxid $Li_xMyO_2$ mit $0,5 \leq x/y \leq 1,0$ und M = Metall aus den Gruppen VII b, VIII b, vorzugsweise Co, Ni, Mn, umfaßt und deren negative Elektrode aus einem durch hinhaltende Verkokung von organischen Substanzen gebildeten Kohleprodukt mit ungeordnetem Kristallbau besteht, sind beide Elektroden im Einbauzustand entladen, die negative Elektrode jedoch durch eine Vorlithiierung in solchem Umfang mit Lithium dotiert, wie dieses irreversibel zur Bildung von ionenleitenden Deckschichten verbraucht wird. Diese Maßnahme macht die verlustlose Deintercalation jeder weiterhin eingelagerten Lithiummenge möglich, so daß sich die Zelle im zyklischen Lade/Entladebetrieb von Anfang an weitgehend kapazitätsstabil verhält.

Die Erfindung betrifft ein elektrochemisches Sekundärelement mit einer positiven Elektrode, deren aktives Material eine lithiumintercalierende Chalkogenverbindung eines Übergangsmetalls umfaßt, einer negativen Elektrode, deren aktives Material ein lithiumintercalierendes Kohleprodukt umfaßt und einem nichtwässerigen Elektrolyten.

Der Verwendbarkeit von wiederaufladbaren Lithiumzellen auf vielen Gebieten waren bis vor kurzem wegen mangelnder Zyklisierfähigkeit und hoher Selbstentladung Grenzen gesetzt. Während Gewicht und Größe der Zellen stark reduziert und so den stromverbrauchenden Geräten gut angepaßt werden konnten, sind Lithiumzellen im Prinzip Primärelemente geblieben, da sich ihre Fähigkeit zu häufiger Wiederaufladung als unbefriedigend erwies.

Den eigentlichen Durchbruch zu einer wiederaufladbaren Lithiumelektrode bildete die Entdeckung von elektronenleitenden Gerüstsubstanzen, die in der Lage sind, Lithiumionen im Wechsel von Ladung und Entladung in ihr Wirtsgitter zu intercalieren und zu deintercalieren. An die Stelle der Lithiumelektrode tritt die aus der Li-Intercalationsverbindung gebildete Elektrode, jedoch mit dem Unterschied, daß die Elektrodenreaktionen der Lithiumelektrode über die Wirtsgitter-Matrix frei von unerwünschten Begleiterscheinungen wie Schlamm- und/oder Dendritenbildung weitgehend reversibel ablaufen.

Aus der JP-A-81-94788 ist eine Lithium-Knopfzelle bekannt, in der Graphit in Form einer Preßpulvertablette die Matrix der negativen Lithiumelektrode bildet. Die tablettenförmige positive Gegenelektrode besteht aus einem Übergangsmetalloxid oder -sulfid. Diese Verbindungen kristallisieren z. B. in Schichtengittern mit verhältnismäßig geringen Bindungsstärken in Richtung der Schichten-Normalen, was sie ebenfalls zur reversiblen Einlagerung von Lithiumionen zwischen diese Schichten befähigt.

Der Lade-/Entladebetrieb einer solchen Zelle vollzieht sich also durch die wechselseitige Beladung (Dotierung) der einen Elektrodenmatrix mit $Li^+$-Ionen und Entleerung (Entdotierung) der anderen Elektrodenmatrix von $Li^+$-Ionen als der eigentlichen elektrochemisch aktiven Ionenspezies.

Der US-PS 4668 595 zufolge sind Graphiteinlagerungsverbindungen jedoch gegenüber organischen Elektrolyten nicht stabil, während sich als Kohlematrix anstelle von Graphit vielmehr bestimmte Kohleprodukte, die aus organischen Polymerverbindungen über einen hinhaltenden Verkokungsprozeß gewonnen werden, eignen. Solche Kohleprodukte werden in Anspielung auf ihre gestörte mikrokristalline Struktur auch turbostratische Kohlenstoffe genannt (vgl. F. Levy, Intercalated layered materials, D. Reidel, Dorndrecht 1979).

In Verbindung mit lithiumintercalierenden Übergangsmetalloxiden als Material für die positive Elektrode lassen sich mit den genannten Kohleelektroden sowie mit einem nichtwässerigen Elektrolyten auf Basis eines Lithiumsalzes wiederaufladbare Lithiumbatterien im geladenen Zustand herstellen, die Ruhespannungen bis zu 4,5 Volt aufweisen.

Der Zusammenbau der Zelle erfolgt mit ungeladenen Elektroden, d. h. mit Li-freiem Kohlenstoff und einem mit Li-dotierten Metalloxid.

In einer anderen bekannten Knopfzelle gemäß US-PS Re. 33306 ist im Einbauzustand die positive Elektrode ein Li-freies Metalloxid, d. h. geladen; die negative Elektrode besteht aus einem Kohlepreßling in engem leitenden Kontakt zu einer Lithiumscheibe, ist also ebenfalls geladen. Durch Stehenlassen wird das Kohlematerial als Folge von Selbstentladung des Lithiums in situ mit $Li^+$-Ionen dotiert, so daß sich bei anschließender Inbetriebsetzungsladung der Zelle das lithiumhaltige Kohlenstoffintercalat bildet.

Beim Experimentieren mit Lithium-Sekundärzellen vom Intercalationstyp, deren Elektroden im entladenen Zustand eingebaut wurden, hat es sich nun gezeigt, daß bei der Zyklenbehandlung nach spätestens zwei Zyklen die Stromausbeute auf etwa 60 % ihrer ursprünglichen Höhe zurückgeht, daß aber bei fortgesetzter Zyklisierung eine weitere Kapazitätsminderung unterbleibt.

Der Erfindung liegt die Aufgabe zugrunde, eine Lithium-Sekundärzelle der eingangs genannten Gattung anzugeben, die von Anfang an eine gleichbleibende Zyklenkapazität aufweist.

Die Aufgabe wird erfindungsgemäß durch ein Sekundärelement gelöst, wie es im Patentanspruch 1 definiert ist.

Bei der erfindungsgemäßen Sekundärzelle sind demnach sowohl die positive Elektrode als auch die negative Elektrode vom Intercalationstyp, d. h. beiden Elektroden liegt eine Gerüstsubstanz zugrunde, von deren Wirtsgitter Lithiumionen im Wechsel von Ladung und Entladung aufgenommen und wieder abgegeben werden. Das Gerüstmaterial der positiven Elektrode besteht aus einem Übergangsmetallchalkogenid, vorzugsweise einem Übergangsmetalloxid des Typs $Li_x MyO_2$ in der mit Lithium dotierten Form, wobei $0,5 \leq x/y \leq 1,0$ und M ein Metall aus einer Gruppen VII b, VIII b ist. Es sind auch Mischungen von Metallen aus diesen Gruppen möglich. Vorzugsweise ist M eines der Metalle Co, Ni, Mn.

Die negative Elektrode umfaßt als Wirtssubstanz oder Matrix für das elektrochemisch aktive Lithium ein Kohleprodukt des durch einen sogenannten "Delayed coking process" gewonnenen Typs. Vorzugsweise eignet sich für den vorgesehenen Zweck ein bereits in der Stahlindustrie verwendeter Nadelkoks.

Für nähere Informationen zur Verfahrenstechnik sowie über typische Nadelkoks-Spezifikationen sei hier auf H. M. Feintuch, J. A. Bonilla und R. L. Godino in Handbook of Petroleum Refining Processes, R. A. Meyers, ed., Mc. Grawhill, New York S. 7.1 - 7.61 (1986) verwiesen.

Im Gegensatz zum Graphit mit seinem geordneten hexagonalen Schichtengitter weist der erfindungsgemäß verwendete Kohlenstoff eine Gitterstruktur mit stark fehlorientierten, gestörten Netzebenen auf.

Der Zellenelektrolyt wird von einem Lithiumsalz gebildet, das in einem nichtwässerigen Lösungsmittel gelöst ist. Die verwendbaren Lithiumsalze und Lösungsmittel entsprechen durchweg denen, die bei bekannten Lithium-Sekundärzellen in Gebrauch sind. Besonders günstig ist eine ca. 1 molare Lösung von $LiClO_4$ in Propylencarbonat (PC).

Die vorliegende Erfindung sieht nun vor, daß in der fertig montierten und verschlossenen Zelle die positive Elektrode ungeladen, d. h. mit Lithium dotiert ist, während die negative Kohleelektrode durch eine Vorlithiierung nur mit soviel Lithium dotiert ist, wie dieses von der Kohlematrix unter Bildung einer Deckschicht, d. h. durch eine irreversible chemische Reaktion mit dem Kohlematerial von diesem festgehalten wird und an den Transportvorgängen des Lade-/Entladebetriebes nicht beteiligt ist.

Bei elektrischen Versuchen mit Lithiumzellen des vorbeschriebenen Typs, deren negative Elektroden anfangs aus einem lithiumfreien Nadelkoks bestanden, hatte es sich nämlich gezeigt, daß im ersten Lade-/Entladezyklus die Zellkapazität in erheblichem Umfang zurückgeht, im weiteren Zyklenverlauf jedoch das verringerte Niveau annähernd einhält.

Dem Intercalationsmechanismus wird offenbar eine gewisse Menge an Lithium durch Festlegung an der Oberfläche des chemisch nicht indifferenten Kohleprodukts von Anfang an entzogen. Durch die erfindungsgemäße Maßnahme der Vorlithiierung wird eine Kohleelektrode zur Verfügung gestellt, deren eigene Reaktivität insoweit abgesättigt ist, als die Intercalation und Deintercalation des Lithiums in ihrem Wirtsgitter quasi verlustlos, mithin reversibel ablaufen kann.

Die Menge des für die Vorlithiierung benötigten Lithiums hängt von der spezifischen Oberfläche des Kohleprodukts ab und kann daher stark, etwa zwischen den Grenzen 1 Gew. % und 6 Gew. %, bezogen auf das Gewicht der Kohle, schwanken. Bei dem bevorzugten Nadelkoks sollte die Dotierungsmenge etwa 2 Gew. % bis 5 Gew. % betragen.

Praktisch geschieht die Vorlithiierung durch Mischen des gepulverten Kohlematerials mit der entsprechenden Menge Lithiumpulver unter Schutzgas bzw. im Vakuum oder durch Einladen des Lithiums auf elektrochemischm Wege.

Die Erfindung wird anhand von Beispielen mit zugehörigen Figurendarstellungen verdeutlicht.

Figur 1 zeigt den Spannungsverlauf einer $Li/Li_xC$-Konzentrationskette bei der erstmaligen Ladung und Entladung.

Figur 2 zeigt die Kapazitätsentwicklung der Konzentrationskette nach Figur 1 im Zyklenbetrieb.

Figur 3 zeigt die Kapazitätsentwicklung einer erfindungsgemäß hergestellten Li-Sekundärzelle (b) im Vergleich zu einer nicht erfindungsgemäßen Zelle (a) im Zyklenbetrieb.

Beispiel 1:

In den Deckel eines Knopfzellengehäuses (Abmessungen der Knopfzelle: 20 mm Durchmesser; 1,6 mm Höhe) wurden 64 mg einer Mischung aus 90 Gew. % Nadelkoks und 10 Gew. % Polyethylenpulver (PE) eingepreßt. In das Becherteil wurde als Gegenelektrode eine Lithiumfolie von 15 mm Durchmesser und der Masse 14,0 mg eingebracht. Nach Zwischenlage eines mikroporösen Polypropylen (PP)-Scheiders zwischen die Elektroden, der mit einer 1,0 m $LiClO_4/PC$-Elektrolytlösung getränkt war, wurde die Zelle geschlossen.

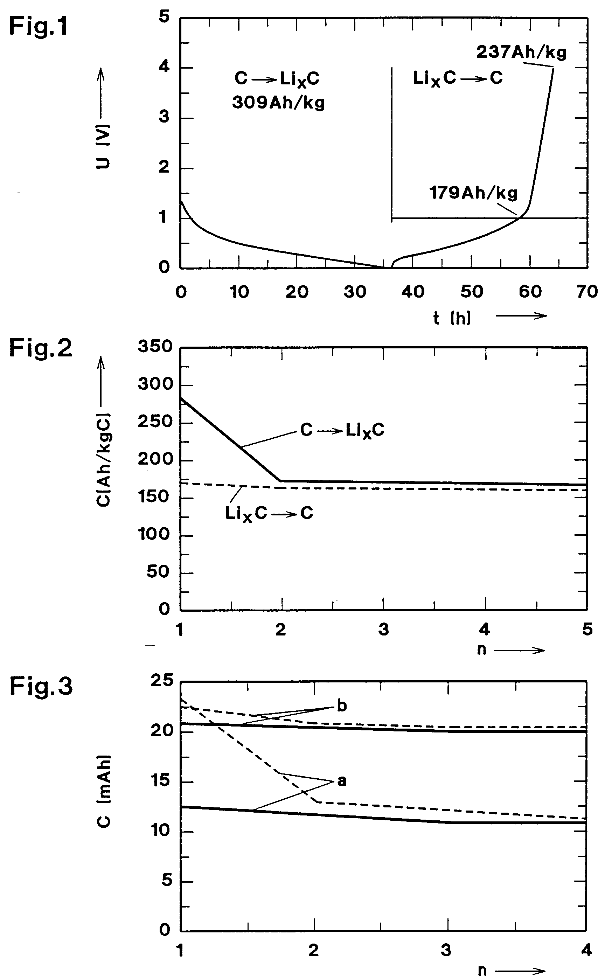

Während einer ersten Strombeaufschlagung der Zelle mit einem Konstantstrom von 0,5 mA/cm$^2$ war die Kohleelektrode kathodisch und die Lithiumfolie anodisch geschaltet. Nach einem Stromfluß von 36 h war die Zellspannung von anfänglich über 1 Volt auf 0 Volt abgefallen, vgl. hierzu Fig. 1. Damit wurde das Ende der Beladung des Kohlenstoffs mit Lithium angezeigt. Die bei der Beladung, $C \rightarrow Li_xC$, geflossene Strommenge von 18 mAh stellt somit die Kapazität der negativen Elektrode, bezogen auf die Einwaage von 57,5 mg Nadelkoks, dar. Dies entspricht einer Kapazität von umgerechnet 309 Ah/kg C.

Durch Umkehr der Stromrichtung wurde die Lithium-Intercalation rückgängig gemacht und dabei bis zum Erreichen einer Zellspannung von 1,0 Volt umgerechnet 179 Ah/kg C und bis zum Erreichen einer Zellspannung von 4,0 Volt umgerechnet insgesamt 237 Ah/kg C ausgeladen. Im Vergleich zu der für die erste Beladung aufgewendeten Strommenge liegt die Stromausbeute bei nur 77 %. Demnach sind ca. 23 % der erstmals in das Kohlegerüst transportierten Lithiummenge an dieses irreversibel gebunden worden.

In Fig. 2 ist die Kapazitätsentwicklung der vorbeschriebenen Zelle beim Laden ($C \rightarrow Li_xC$) und Entladen ($Li_xC \rightarrow C$) im weiteren Zyklenverlauf (n = Zyklusnummer), wiedergegeben. Wie ersichtlich, sinkt die Kapazität bis zum 2. Zyklus weiter bis auf ca. 60 % der ursprünglichen Höhe, bleibt aber dann konstant.

**Beispiel 2**

Mit einem gleichen Knopfzellengehäuse wie die Lithium-Konzentrationskette nach Beispiel 1 wurde eine $Li_xC/Li_{0,5}MnO_2$-Zelle wie folgt hergestellt:

Einer Mischung 1 aus 5 g Nadelkoks und 100 mg PTFE wurden 105 mg entnommen und als negatives Elektrodenmaterial in den Gehäusedeckel gepreßt.

Eine Mischung 2 bestand aus 90 Gew. Tln. Li $Mn_2O_4$ (hergestellt durch Mischen von $Li_2CO_3$ und $MnCO_3$ im Molverhältnis 1:4, 5- bis 6-stündiges Tempern bei 650 °C und anschließendes 12-stündiges Tempern bei 850 °C im Luftstrom), 4 Gew. Tln. Leitruß und 6 Gew. Tln. PTFE; 220 mg dieser Mischung wurden als positive Gegenelektrode in das Becherteil des Knopfzellengehäuses eingepreßt. Nach Zwischenlage eines Polypropylenscheiders zwischen die Elektroden und Zugabe von 1,0 m $LiClO_4$/PC-Elektrolyt unter Vakuum wurde die Zelle verschlossen. Die Zelle ist in diesem Zustand entladen.

Mit einem Strom von 1 mA wurde die Zelle nunmehr geladen. Die Ladungsaufnahme bis zum Erreichen einer Zellspannung von 4,3 Volt betrug 23,2 mAh. Hingegen wurden in den Folgezyklen nur jeweils 11,6 mAh eingeladen und wieder ausgeladen. Diese Kapazitätsentwicklung ist durch das Kurvenpaar a der Fig. 3 dargestellt. Das entstandene Kapazitätsdefizit geht zu Lasten der positiven Elektrode.

**Beispiel 3**

Eine erfindungsgemäße Zelle entstand wie folgt:

5 g Nadelkoks wurden unter Argon mit 250 mg Lithiumpulver gemischt und 2 h bei 200 °C getempert. Anschließend wurden 0,5 g Polyethylenpulver (PE) zugemischt und so eine Mischung 3 erhalten.

115 mg dieser Mischung bildeten das negative Elektrodenmaterial der Zelle.

Die Zusammensetzung des positiven Elektrodenmaterials war die gleiche wie bei Mischung 2 (vgl. Beispiel 2), der 220 mg entnommen wurden.

Die Zellenmontage und die Elektrolytbefüllung mit 1,0 m $LiClO_4$/PC geschah im übrigen unter den gleichen Bedingungen wie in Beispiel 2.

Bei der ersten Ladung wurden mit einem Ladestrom von 1 mA bis zum Erreichen von 4,3 Volt 23 mAh aufgenommen. Bei der darauffolgenden Zyklisierung fiel die Kapazität bis zum 2. Zyklus dank der vorlithiierten negativen Elektrode nur geringfügig bis auf 20,3 mAh ab und blieb dann im weiteren Zyklenverlauf bei diesem Niveau konstant. Figur 3 macht dieses günstige Zyklenverhalten der erfindungsgemäßen Zelle (Kurvenpaar b) im Vergleich zu demjenigen einer nicht erfindungsgemäßen Zelle (Kurvenpaar a) augenfällig. Die gestrichelten Kurven geben jeweils die Ladungsaufnahme C (mAh) und die ausgezogenen Kurven die Ladungsausbeute über der Zyklenzahl n wieder.

**Patentansprüche**

1. Elektrochemisches Sekundärelement mit einer positiven Elektrode, deren aktives Material eine lithiumintercalierende Chalkogenverbindung eines Übergangsmetalls umfaßt, einer negativen Elektrode, deren aktives Material ein lithiumintercalierendes, durch einen hinhaltenden Verkokungsprozeß aus organischen Substanzen gebildetes Kohleprodukt mit ungeordnetem Gitterbau umfaßt, und einem nichtwässerigen Elektrolyten, dadurch gekennzeichnet, daß im Einbauzustand der Zelle das Übergangsmetallchalkogenid mit Lithium beladen ist und daß das Kohlematerial durch Vorlithiierung lediglich mit einer solchen Menge an Lithium beladen ist, wie in dem Kohlegerüst durch chemische Reaktion irreversibel gebunden ist.

2. Elektrochemisches Sekundärelement nach Anspruch 1, dadurch gekennzeichnet, daß die im vorlithiierten Kohlematerial gebundene Lithiummenge zwischen 1 und 6 Gew. %, vorzugsweise 2 bis 5 Gew. % des eingesetzten Kohleprodukts beträgt.

3. Elektrochemisches Sekundärelement nach Anspruch 2, dadurch gekennzeichnet, daß das positive Aktivmaterial ein lithiiertes Übergangsmetalloxid vom Typ $Li_x M_y O_2$ ist, wobei $0,5 \leq x/y \leq 1,0$ und M ein Metall aus den Gruppen VII b, VIII b oder eine Mischung unter diesen, vorzugsweise Co, Ni, Mn, bedeutet.

4. Elektrochemisches Sekundärelement nach einem der Ansprüche 1 bis 3, dadurch gekennzeichnet, daß das Kohlematerial ein Nadelkoks ist.

**Fig.1**

**Fig.2**

**Fig.3**

**Europäisches Patentamt**

# EUROPÄISCHER RECHERCHENBERICHT

Nummer der Anmeldung

EP    91 11 9579

Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 201 038 (TOSHIBA BATTERY CO.,LTD.)<br>* Seite 9, Zeile 26 - Seite 10, Zeile 25 *<br>* Seite 13, Zeile 27 - Seite 15, Zeile 20 *<br>--- | 1 | H01M4/58<br>H01M10/40 |
| Y | CHEMICAL ABSTRACTS, vol. 111, no. 10,<br>4. September 1989, Columbus, Ohio, US;<br>abstract no. 81304N,<br>KANNO,RYOJI: 'CHARGE-DISCHARGE MECHANISM OF CARBON ELECTRODES FOR LITHIUM SECONDARY BATTERIES'<br>Seite 203 ;<br>* Zusammenfassung *<br>--- | 1 | |
| A | WO-A-9 013 924 (MOLI ENERGY LIMITED)<br>* Seite 3, Zeile 10 - Seite 5, Zeile 35 *<br>* Seite 21, Zeile 15 - Seite 22, Zeile 7 *<br>--- | 1,3 | |
| A | EP-A-0 357 001 (SONY CORPORATION)<br>*WHOLE DOCUMENT*<br>--- | 1,3 | |
| A | EP-A-0 328 131 (MITSUBISHI PETROCHEMICAL CO.,LTD.)<br>* Seite 10, Zeile 10 - Seite 11, Zeile 37 *<br>* Seite 13; Beispiel 1 *<br>--- | 1 | **RECHERCHIERTE SACHGEBIETE (Int. Cl.5)**<br><br>H01M |
| A | DE-A-3 438 221 (LIESS,HANS-DIETER)<br>* Seite 5, Absatz 1 - Seite 6, Absatz 2; Beispiel 4 *<br>--- | 1 | |
| A | US-A-4 423 125 (SAMAR BASU)<br>* Spalte 3, Zeile 28 - Spalte 4, Zeile 12 *<br>--- | 1 | |
| A | PATENT ABSTRACTS OF JAPAN<br>vol. 13, no. 192 (E-753)(3540) 9. Mai 1989<br>& JP-A-1 014 870 ( MITSUBISHI GAS CHEM CO INC )<br>* Zusammenfassung *<br>--- | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | DE VOS L.A. |

Europäisches
Patentamt

**EUROPÄISCHER RECHERCHENBERICHT**

Nummer der Anmeldung

EP    91 11 9579
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | PATENT ABSTRACTS OF JAPAN vol. 13, no. 38 (E-709)(3386) 27. Januar 1989 & JP-A-63 236 259 ( TOSHIBA BATTERY CO LTD ) * Zusammenfassung * --- | 1 | |
| D,A | EP-A-0 205 856 (ASAHI KASEI KOGYO KABUSHIKI KAISHA) * Spalte 11, Zeile 5 - Zeile 33 * * Spalte 13, Zeile 16 - Spalte 15, Zeile 57 * ----- | 1,4 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | DE VOS L.A. |

EPO FORM 1503 03.82 (P0403)